# EUROPÄISCHE PATENTANMELDUNG

(11) **EP 0 795 691 A1**
(43) Veröffentlichungstag der Anmeldung: **17.09.1997**
(21) Anmeldenummer: 97104124.9
(22) Anmeldetag: 12.03.1997
(51) Int. Cl.: F16B 37/14

(54) **Schutzring gegen Kontaktkorrosion**

(30) Priorität: 13.03.1996 DE 19609684
(71) Anmelder: Kamax-Werke Rudolf Kellermann GmbH & Co. KG, D-37520 Osterode (DE)
(72) Erfinder: Damm, KLaus Dr. Ing., 35315 Homberg/Ohm (DE); Sommer, Wolfgang Dipl.Ing., 35285 Gemünden (DE); Mages, Walter J. Dr. Ing., 36304 Alsfeld (DE)
(74) Vertreter: Patentanwälte Rehberg + Hüppe

(57) **Zusammenfassung**

Ein Schutzring (1) gegen Kontaktkorrosion für ein an einem Bauteil (8) montierbares und eine Auflagefläche (13) aufweisendes Verbindungselement (3), insbesondere Schraube, weist einen Dichtring (2) aus Kunststoff auf. Der Dichtring (2) ist in unmontiertem Zustand des Verbindungselements (3) an dem Verbindungselement (3) so abgestützt, daß sich ein über die Auflagefläche (13) des Verbindungselementes (3) am Bauteil (8) in axialer Richtung überstehender Wulst (15) ergibt, der bei der Montage des Dichtrings (2) und des Verbindungselements (3) unter Ausbildung einer ringförmigen, die Kontaktfläche (16) zwischen Verbindungselement (3) und Bauteil (8) mit Abstand umschließenden Dichtfläche (17) zum Bauteil (8) bleibend axial verspannbar ist. Der Dichtring (2) weist einen in entgegengesetzter Richtung zum Wulst (15) abstehenden Schutzmantel (18) für das Verbindungselement (3) auf.

## Beschreibung

Die Erfindung betrifft einen Schutzring gegen Kontaktkorrosion für ein an einem Bauteil montierbares und eine Auflagefläche aufweisendes Verbindungselement, insbesondere Schraube, mit einem Dichtring aus Kunststoff. Unter Kontaktkorrosion wird eine galvanische Korrosion verstanden, die an mit Verbindungselementen zu verschraubenden Bauteilen auftritt, wenn das Bauteil aus einem chemisch unedleren Metall im Vergleich zu dem Verbindungselement besteht, so daß sich beim Auftreten eines Elektrolyten eine galvanische Zelle ausbildet, bei dem das unedlere Metall die Anode bildet. Die Erfindung bezieht sich insbesondere auf im Fahrzeugbau anwendbare Bauteile aus Magnesiumlegierungen und Verbindungselemente aus Stahl. Ein elektrisch leitender Kontakt zwischen dem Bauteil aus dem unedleren Metall und dem Verbindungselement aus dem vergleichsweise edleren Metall läßt sich in aller Regel nicht vermeiden, wenn eine nennenswerte Anpreß- oder Vorspannkraft mit dem Verbindungselement übertragen werden soll. Jedenfalls ist eine direkte Auflage für die Aufbringung und Beibehaltung einer Vorspannkraft optimal. Dagegen läßt sich eine Elektrolyt-Ansammlung an dieser Kontaktstelle zwischen Verbindungselement und Bauteil, die schon allein durch Feuchtigkeit aus der Atmosphäre erfolgen kann, durch Anwendung eines Schutzrings vermindern oder sogar verhindern.

Ein Schutzring der eingangs beschriebenen Art ist aus der DE 44 39 567 bekannt. Der Schutzring ist in Form einer aus Kunststoff bestehenden Kappe mit und ohne Durchbrechung ausgebildet. Wenn der Schutzring keine Durchbrechung aufweist, läßt er sich nur nachträglich nach der Montage des Verbindungselementes am Bauteil auf den Kopf des Verbindungselementes aufsetzen. Wenn der Schutzring dagegen eine Durchbrechung aufweist, ist es möglich, aus dem Verbindungselement und dem Schutzring eine vormontierte Einheit zu bilden, die dann zu Montagezwecken einsetzbar ist. Der bekannte Schutzring besteht aus einem Dichtring aus Kunststoff. Der Dichtring weist als wesentliche Funktionselemente eine Mehrzahl von Dichtlippen auf, die eine Abdichtwirkung zu dem Bauteil einerseits und zu dem Verbindungselement andererseits erbringen. Solche Dichtlippen besitzen einen sich verjüngenden Querschnitt und liegen in der montierten Stellung mehr oder weniger linienförmig an dem Bauteil oder dem Kopf des Verbindungselementes an. Die Dichtlippen arbeiten mit kugel- oder kegelförmig gestalteten Gegenflächen am Kopf des Verbindungselementes zusammen. Als Verbindungselement kann eine Stellschraube Anwendung finden. Eine nennenswerte Anpreßkraft oder gar Vorspannkraft läßt sich mit dieser bekannten Stellschraube nicht übertragen. In einer anderen Ausführungsform wird ein Teil des Materials einer Dichtlippe zwischen dem Bauteil und einer Auflagefläche am Kopf des Verbindungselementes bei der Montage des Verbindungselementes eingeklemmt. Dies erbringt zwar eine gute Abdichtwirkung an dieser Stelle gegen Kontaktkorrosion. In nachteiliger Weise lassen sich jedoch Setzverluste und damit das Nachlassen der ursprünglich aufgebrachten Vorspannkraft nicht vermeiden, so daß diese Verbindung unsicher ist. Weiterhin ist die Anwendung von Dichtlippen in ihrer filigranen Ausbildung gerade bei Schüttgut, wie es nun einmal Schrauben, Muttern u. dgl. sind, kaum reproduzierbar einzuhalten. Durch die gegenseitige Berührung der Teile des Schüttgutes besteht die Gefahr, daß die Dichtlippen örtlich beschädigt werden, bevor das betreffende Verbindungselement montiert ist. Aber auch dann, wenn die Dichtlippen ohne Beschädigung bleiben, muß damit gerechnet werden, daß die entsprechende Gegenfläche am Bauteil teilweise rauh und/oder riefig sein kann, wobei solche unvermeidbaren Unebenheiten in der Gegenfläche des Bauteils durch die Dichtlippe nicht ausgeglichen werden können. Eine sichere reproduzierbare Abdichtung erscheint mit dem bekannten Schutzring nicht möglich.

Aus der Zeitschrift METALL, Heft 6, 1992, Seite 570, "Korrosionseigenschaften von neuen Magnesiumlegierungen", A. L. OLSEN, ist eine Schrauben-Ausführung zur Vermeidung von Kontaktkorrosion bekannt, bei der eine Kappe aus Kunststoff Anwendung findet, die sich in axialer Richtung über die Höhe des Kopfes einer Innensechskant-Schraube erstreckt und mit einem radial nach innen gerichteten Bund in einen ringförmig umlaufenden Freiraum um einen gesondert ausgebildeten Zylinderansatz am Kopf der Schraube im Anschluß an die Auflagefläche eingreift. Damit findet eine Kunststoff-Abdeckung Anwendung, um die freie Oberfläche des Schraubenkopfes möglichst klein zu halten.

Der Erfindung liegt die Aufgabe zugrunde, einen Schutzring der eingangs beschriebenen Art bereitzustellen, der einerseits eine verläßliche Wirkung gegen Kontaktkorrosion auch bei Verwendung von Verbindungselementen als Schüttgut erbringt und andererseits das reproduzierbare Aufbringen einer Vorspannkraft an dem Verbindungselement nicht behindert.

Erfindungsgemäß wird dies bei dem Schutzring der eingangs beschriebenen Art dadurch erreicht, daß der Dichtring in unmontiertem Zustand des Verbindungselements an dem Verbindungselement so abgestützt ist, daß sich ein über die Auflagefläche des Verbindungselementes am Bauteil in axialer Richtung überstehender Wulst ergibt, der bei der Montage des Dichtrings und des Verbindungselements unter Ausbildung einer ringförmigen, die Kontaktfläche zwischen Verbindungselement und Bauteil mit Abstand umschließenden Dichtfläche zum Bauteil bleibend axial verspannbar ist, und daß der Dichtring einen in entgegengesetzter Richtung zur Wulst abstehenden Schutzmantel für das Verbindungselement aufweist.

Die Erfindung wendet sich von der Anordnung von Dichtlippen ab und setzt stattdessen einen Wulst ein, also ein vergleichsweise weniger empfindliches Bauelement, welches keinen sich lippenartig verjüngenden Querschnitt besitzt, sondern einen abgerundeten Querschnitt aufweisen kann. Ein solcher Wulst mit einem vergleichsweise mehr Material umschließenden Querschnitt ist auch weniger verletzungsgefährdet, wenn solche Schutzringe allein oder in Verbindung mit Verbindungselementen als Schüttgut gehandhabt werden, und zwar auch dann, wenn sie beispielsweise einer Robotermontage zugeführt werden. Wichtig ist auch die Relativdimensionierung und -anordnung des Dichtrings relativ zum Verbindungselement. In unmontiertem Zustand muß der Wulst an dem Dichtring bei axialer Abstützung an dem Verbindungselement so weit überstehen, daß bei der Montage des Dichtringes der Wulst zum Bauteil bleibend axial verspannbar ist. Bei dieser Verspannung legt sich der Wulst an das Bauteil flächig an und verformt sich. Es wird eine ringförmige Dichtfläche - im Gegensatz zu einer linienförmigen Berührung durch eine Dichtlippe - geschaffen, wobei sich die Dichtfläche auch in radialer Richtung über eine gewisse Strecke erstreckt. Die Anordnung dieser sich bildenden Dichtfläche ist dabei so getroffen, daß kein Material des Dichtrings bzw. des Wulstes zwischen die Kontaktflächen zwischen dem Verbindungselement und dem Bauteil einwandern kann, wodurch die Aufbringung und Beibehaltung der Vorspannkraft beeinträchtigt würde. Die Dichtfläche weist vielmehr einen definierten Abstand zu dieser Kontaktfläche auf. Zwar ist es möglich, daß der Wulst auch den Kopf des Verbindungselementes teilweise untergreift, jedoch muß auch dann sichergestellt sein, daß kein Material des Wulstes in die Kontaktfläche zwischen Verbindungselement und Bauteil einwandern kann. Der Dichtring weist weiterhin in entgegengesetzter Richtung zu dem Wulst einen Schutzmantel auf. Der Schutzmantel stellt keine Schutzkappe dar, weil er eine Öffnung besitzt, durch die hindurch ein Verdrehwerkzeug am Kopf des Verbindungselementes angreifen kann. Damit ergibt sich gleichzeitig die Möglichkeit, aus dem Schutzring und dem Verbindungselement eine vormontierte Einheit zu erstellen, so daß bei der Montage des so ausgestatteten Verbindungselementes die Dichtfläche aus dem Wulst gleichsam automatisch beim Aufbringen der vorspannkraft entsteht und ein gesonderter Montagevorgang, wie bei einer nachträglich aufzusetzenden Schutzkappe, vermieden wird. Der Schutzmantel kann einen kleineren Innendurchmesser aufweisen, als es dem Außendurchmesser des Kopfes des Verbindungselementes an dieser Stelle entspricht. Wesentlicher Sinn dieses Schutzmantels ist die hinreichende Verlängerung des Weges oder Abstandes zwischen den freien Oberflächen des Verbindungselementes einerseits und des Bauteils andererseits, um den Elektrolytweg möglichst lang zu gestalten. Wenn der Innendurchmesser des Schutzmantels kleiner als der Außendurchmesser des betreffenden Teils des Verbindungselementes ist, entsteht durch die Haftreibung an der vormontierten Einheit eine hinreichende Verbindung zwischen den beiden Teilen, um eine Unverlierbarkeit sicherzustellen. Der Dichtring des Schutzmantels besteht aus Kunststoff, insbesondere aus einem thermoplastischen Elastomer.

Der Schutzring kann zusätzlich zu seinem Dichtring einen ringförmigen scheibenartigen Grundkörper aus Metall aufweisen, der eine Durchbrechung für den Durchtritt des Verbindungselements, eine Auflagefläche für das Bauteil und eine Auflagefläche für das Verbindungselement besitzt. Dieser zusätzliche scheibenartige Grundkörper aus Metall ist in mehrfacher Hinsicht sinnvoll. Er erbringt durch seine Durchbrechung eine Zentrierwirkung zu dem Verbindungselement, so daß die relative Lage der durch den Wulst gebildeten Dichtfläche zu der Achse des Verbindungselements und Schutzrings reproduzierbar eingehalten werden kann. Gleichzeitig ergibt sich auch eine Zentrierwirkung für die Anlage des Schutzmantels am Kopf des Verbindungselementes. Schließlich gestattet es der Grundkörper aus Metall, eine unverlierbare Einheit zwischen Schutzring und Verbindungselement herzustellen. So ist es insbesondere möglich, den Schutzring mit seinem Grundkörper aus Metall auf den Schaft einer Schraube aufzustecken, bevor das Gewinde auf den Schaft aufgerollt wird. Das Gewinde kann dabei einen größeren Außendurchmesser bekommen, als es dem Durchmesser der Durchbrechung entspricht. Der scheibenartige Grundkörper aus Metall stellt dann gleichsam ein Zwischenglied dar, welches zwischen die Auflagefläche am Kopf des Verbindungselementes und die Auflagefläche am Bauteil eingeschaltet ist, wobei jedoch trotzdem durch die Unnachgiebigkeit des Grundkörpers aus Metall eine reproduzierbare Vorspannkraft aufgebracht werden kann. Zusätzlich besteht die Möglichkeit, für den Grundkörper ein Material einzusetzen, welches in seinen elektrochemischen Eigenschaften zwischen dem Material des Bauteils und dem Material des Verbindungselementes angesiedelt ist. So kann insbesondere eine Schraube aus Stahl, ein scheibenartiger Grundkörper aus Aluminium und ein Bauteil aus einer Magnesiumlegierung miteinander kombiniert werden.

Diese Ausbildung läßt sich auch ausgehend von einer Unterlegscheibe definieren. Sie kann auch als eine Unterlegscheibe für ein an einem Bauteil montierbares und eine Auflagefläche aufweisendes Verbindungselement, insbesondere Schraube, mit einem ringförmigen scheibenartigen Grundkörper aus Metall, der eine Durchbrechung für den Durchtritt des Verbindungselements aufweist, angesehen werden, welche sich dadurch kennzeichnet, daß ein den Grundkörper umgebender Dichtring vorgesehen ist, der einen Wulst aufweist, der in unmontiertem Zustand über die dem Bauteil zugekehrte Auflagefläche des Grundkörpers axial vorsteht und bei der Montage des Verbindungselements unter Eintritt einer Dichtwirkung zum Bauteil bleibend axial verspannbar ist, wobei der Dichtring einen in entgegengesetzter Richtung zum Wulst abstehenden Schutzmantel für das Verbindungselement aufweist, der die dem Bauteil abgekehrte Auflagefläche des Grundkörpers axial überragt.

Der Dichtring aus Kunststoff kann mit dem Grundkörper aus Metall verbunden sein. Die Verbindung kann lösbar oder unlösbar ausgebildet sein. Beispielsweise ist es möglich, den Dichtring aus Kunststoff auf den Grundkörper aus Metall aufzuknüpfen und/oder die Verbindung durch einen Vulkanisiervorgang zu vervollkommnen.

Der Grundkörper aus Metall kann im Bereich seiner Durchbrechung einen Kragen oder elastische Halteelemente aus Kunststoff aufweisen. Der umlaufend angeordnete Kragen oder auch die einzeln auf Abstand angeordneten elastischen Halteelemente verhindern eine radiale Bewegung zwischen Grundkörper und Verbindungselement bei der Montage des Verbindungselementes. Es wird eine besonders effektive Zentrierwirkung erreicht. Gleichzeitig wird damit eine Möglichkeit für eine unverlierbare Einheit aus Schutzring und Verbindungselement aufgezeigt.

Der Dichtring kann mit dem Verbindungselement als eine vormontierbare Einheit verbunden sein. Der Dichtring einerseits und das Verbindungselement andererseits sind zur gegenseitigen Abstützung in axialer Richtung aneinander angepaßt. In einer besonderen Ausführungsform kann das Verbindungselement Ausnehmungen zum Eingriff des Dichtringes und zur gegenseitigen Abstützung aufweisen. Insbesondere kann der Dichtring Vorsprünge und das Verbindungselement korrespondierende Ausnehmungen aufweisen.

Der Dichtring aus Kunststoff kann einen sich im wesentlichen radial erstreckenden Schwenkflansch aufweisen, an dem der axial überstehende Wulst und der in entgegengesetzter Richtung abstehende Schutzmantel vorgesehen sind. Bei dieser Ausführungsform tritt eine gewisse Klappwirkung im nachgiebigen Material des Dichtrings ein. Durch die Anordnung des Schwenkflansches erbringt die Anlage und Verformung des Wulstes ein Verschwenken des Schutzmantels in Richtung auf den Kopf des Verbindungselementes, also radial nach innen, wodurch die Abdichtwirkung zwischen Schutzmantel und Verbindungselement herbeigeführt oder verbessert wird.

Der überstehende Wulst des Dichtrings kann in unmontiertem Zustand eine gegenüber seiner Achse schrägstehend angeordnete Stützfläche aufweisen, die sich bei der Montage des Verbindungselementes zunehmend an dem Bauteil anlegt und dabei die Dichtfläche bildet. Durch diese schrägstehend, also nicht im Winkel von 90° zu der Achse des Dichtrings und des Verbindungselementes verlaufende Stützfläche wird eine gezielte Möglichkeit geschaffen, mit der sich aus dem Wulst zunehmend die Dichtfläche bildet. Auf den Ablauf der Verformung wird damit Einfluß ausgeübt, so daß der Abstand zwischen der Dichtfläche und der Kontaktfläche vorteilhaft klein gehalten werden kann, ohne daß die Gefahr besteht, daß Material des Dichtrings bei der Montage in den Spalt an der Kontaktfläche zwischen Verbindungselement und Bauteil einfließt und den Aufbau einer Vorspannkraft behindert.

Der Dichtring kann einen zweiten, ebenfalls axial überstehenden Wulst aufweisen, der bei der Montage des Dichtrings und des Verbindungselements unter Ausbildung einer weiteren ringförmigen, die Kontaktfläche zwischen Verbindungselement und Bauteil umschließenden zweiten Dichtfläche zum Bauteil bleibend axial verspannbar ist, und daß zwischen den beiden Wulsten eine Isolierkammer vorgesehen ist. Dabei verformen sich beide Wulste zu je einer Dichtfläche, so daß noch eine größere Schutzwirkung gegen Kontaktkorrosion gegeben ist. Zwischen den beiden Wulsten wird eine gegenüber der Atmosphäre abgeschlossene Isolierkammer gebildet.

Die Erfindung läßt sich einerseits an einem separaten Schutzring verwirklichen, der als verkaufsfähige Einheit einem Verbindungselement zugeordnet und mit diesem zusammen montiert wird. Es ist aber auch möglich, aus dem Schutzring und dem Verbindungselement eine vormontierbare Einheit zu schaffen und diesen Gesamtgegenstand als verkaufsfähige Einheit in Verkehr zu bringen. Dies kann insbesondere als unverlierbare Einheit geschehen. In allen Fällen besitzt der Dichtring aus Kunststoff die im Anspruch 1 angegebenen Merkmale.

Die Erfindung wird anhand bevorzugter Ausführungsbeispiele weiter erläutert und beschrieben. Es zeigen:
- Fig. 1: eine erste Ausführungsform des Schutzrings an einem Verbindungselement,
- Fig. 2: eine zweite Ausführungsform des Schutzrings an einem Verbindungselement,
- Fig. 3: eine dritte Ausführungsform des Schutzrings,
- Fig. 4: eine Ausführungsform des Schutzrings in Form einer Schutzkappe,
- Fig. 5: einen Schutzring mit zwei Wulsten,
- Fig. 6: einen zwischen Verbindungselement und Bauteil montierbaren Schutzring,
- Fig. 7: einen schutzring in einer weiteren Ausführungsform,
- Fig. 8: einen weiteren Schutzring,
- Fig. 9: einen weiteren Schutzring und
- Fig. 10: eine weitere Ausführungsform des Schutzrings.

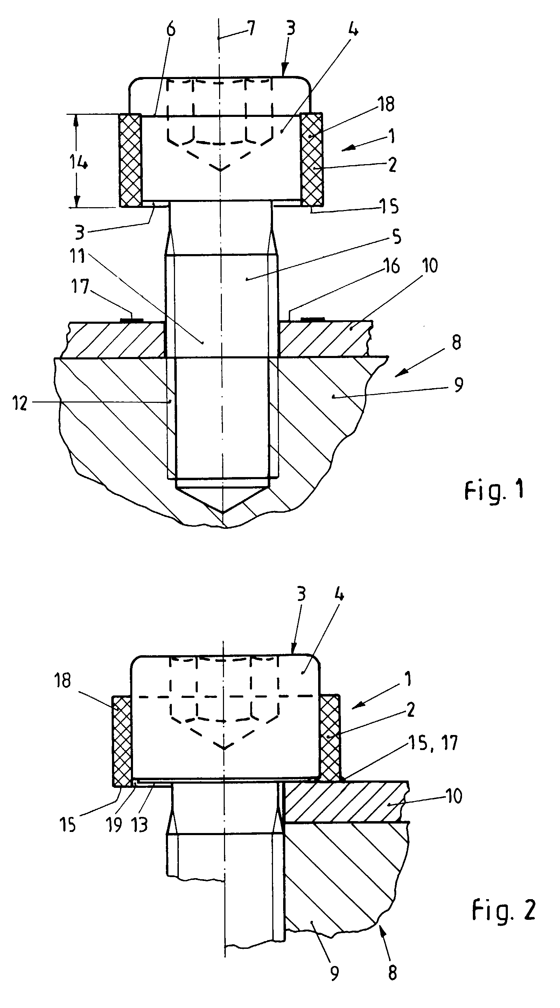

Der in Fig. 1 dargestellte Schutzring 1 besteht aus einem etwa zylindermantelförmigen Dichtring 2 aus Kunststoff oder einem anderen elastomeren Material. Der Schutzring 1 ist einem Verbindungselement 3, hier in Form einer Innensechskant-Schraube zugeordnet. Das Verbindungselement 3 weist einen Kopf 4 und einen Gewindeschaft 5 auf. Der Kopf 4 ist gestuft ausgebildet und besitzt einen im Durchmesser reduzierten Absatz 6 für die Abstützung des Dichtrings 2 in Richtung der Achse 7 des Verbindungselementes und des Dichtrings 2. Das Verbindungselement 3 ist dazu bestimmt, in ein Bauteil 8 eingeschraubt zu werden. Das Bauteil 8 kann aus einem angedeuteten Gehäuse 9 und einem Deckel 10 bestehen, wobei das Verbindungselement 3 dazu dient, den Deckel 10 an dem Gehäuse 9 zu befestigen. Das Verbindungselement 3 besteht in der Regel aus Stahl, während das Gehäuse 9 und der Deckel 10 des Bauteils 8 beispielsweise aus einer Magnesiumlegierung erstellt sind, also einem vergleichsweise unedleren Metall. Es versteht sich, daß der Deckel 10 eine Durchbrechung 11 für den Durchtritt des Gewindeschaftes 5 des Verbindungselementes 3 aufweist. Das Gehäuse 9 ist mit einem Innengewinde 12 versehen, welches auf das Gewinde des Gewindeschaftes 5 des Verbindungselementes 3 abgestimmt ist.

Zum Aufbringen der Vorspannkraft über das Verbindungselement 3 auf das Bauteil 8 besitzt das Verbindungselement eine Auflagefläche 13 unter dem Kopf 4. In unmontiertem Zustand besitzt der Dichtring 2 eine axiale Höhe 14, die größer als die Entfernung des Absatzes 6 von der Auflagefläche 13 ist, damit der Dichtring 2 beim Aufbringen der Vorspannkraft axial entsprechend zusammengepreßt wird. Der Dichtring 2 weist an dem dem Bauteil 8 zugekehrten Ende einen Wulst 15 auf, also keine Dichtlippe, sondern einen eben oder gebogen verlaufenden Bereich, der sich flächig an der Kontaktfläche 16 des Bauteils 8 anlegt, wobei sich der Wulst 15 unter Ausbildung einer durch einen Strich angedeuteten Dichtfläche 17 bleibend verformt. Wichtig ist zu erkennen, daß die Dichtfläche 17 eine gewisse Erstreckung in radialer Richtung zu der Achse 7 aufweist, im Gegensatz zu einer etwa linienförmigen Anlage einer Dichtlippe. Der Dichtring weist weiterhin in der dem Bauteil 8 abgekehrten Richtung einen Schutzmantel 18 auf, der sich an den Kopf 4 des Verbindungselementes 3 anlegt. Der Dichtring 2 ist auf den Kopf 4 des Verbindungselementes 3 aufgeknüpft, so daß damit eine vormontierte Einheit aus Schutzring 1 und Verbindungselement 3 geschaffen ist, die auch zur Robotermontage geeignet ist. Der Dichtring 2 ist an dem Verbindungselement 3 unverlierbar gehalten.

Fig. 2 zeigt eine Zweite Ausführungsform des Schutzrings 1, der auch hier allein aus dem Dichtring 2 besteht. In dem linken Halbschnitt der Fig. 2 ist der unmontierte Zustand und im rechten Halbschnitt der montierte Zustand am Bauteil 8 dargestellt. Es ist insbesondere erkennbar, daß sich der Wulst 15 unter Ausbildung der Dichtfläche 17 flächig verformt hat. Die Auflagefläche 13 unter dem Kopf 4 des Verbindungselementes 3 ist hier abgesetzt vorgesehen und ausgebildet, um einen Freiraum 19 zu schaffen und so eine größere Sicherheit als bei dem Ausführungsbeispiel der Fig. 1 zu haben, daß sich verformbares Kunststoffmaterial des Dichtrings 2 nicht in den Spalt zwischen der Auflageflache 13 und der Kontaktfläche 16 des Bauelementes 8 einlagert. Es wird also eine direkte Auflage der Auflagefläche 13 auf der Kontaktfläche 16 angestrebt, um reproduzierbar und dauerhaft eine Vorspannkraft aufbringen zu können. Bei dem Ausführungsbeispiel der Fig. 2 fehlt der Absatz 6. Stattdessen ist der Dichtring 2 auf den Kopf 4 des Verbindungselementes 3 aufvulkanisiert oder aufgeklebt, wobei die Platzierung des Dichtrings 2 relativ zu dem Kopf 4 auch hier so erfolgen muß, daß der Dichtring 2 in unmontiertem Zustand gegenüber der Anlagefläche 13 axial in Richtung auf das Bauteil 8 übersteht.

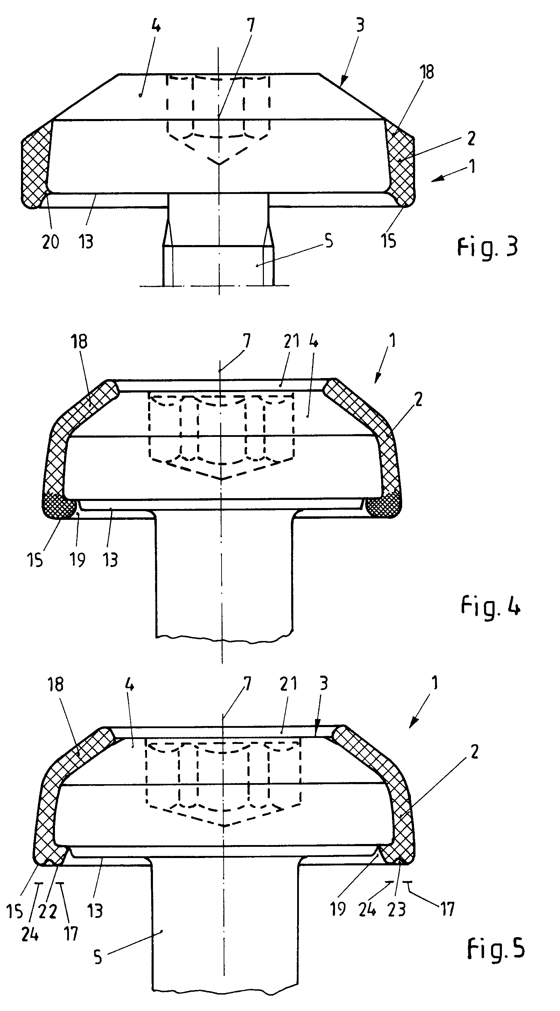

Fig. 3 zeigt eine weitere Ausführungsform eines Verbindungselementes 3 mit einem unverlierbar daran gehaltenen Schutzring 1 in Form eines Dichtrings 2 aus Kunststoff oder anderem elastomerem Material. Der Dichtring 2 kann aufgeknüpft, aufgeklebt, anvulkanisiert oder in ähnlicher Weise befestigt sein. Es ist erkennbar, daß der dem nicht dargestellten Bauteil 8 zugekehrte Wulst 15 hier mit einem abgerundeten Querschnitt ausgebildet ist. Aber auch hier steht der Wulst 15 gegenüber der Auflagefläche 13 des Kopfes 4 in axialer Richtung auf das Bauteil 8 vor. Der Kopf 4 ist kegelförmig ausgebildet, wobei der Schutzmantel 18 entsprechend an die Neigung des Kegels angepaßt ist. Die Übergangskante zwischen dem Kopf 4 und der Auflageflache 13 kann abgerundet ausgebildet sein. Es kann hier eine Aufknüpflippe 20 vorgesehen sein, die die Verbindung zwischen Dichtring 2 und Kopf 4 begünstigt. Es ist erkennbar, daß die Aufknüpflippe 20 wesentlich kleineren Querschnitt und prinzipiell andere Formgebung aufweist als der Wulst 15.

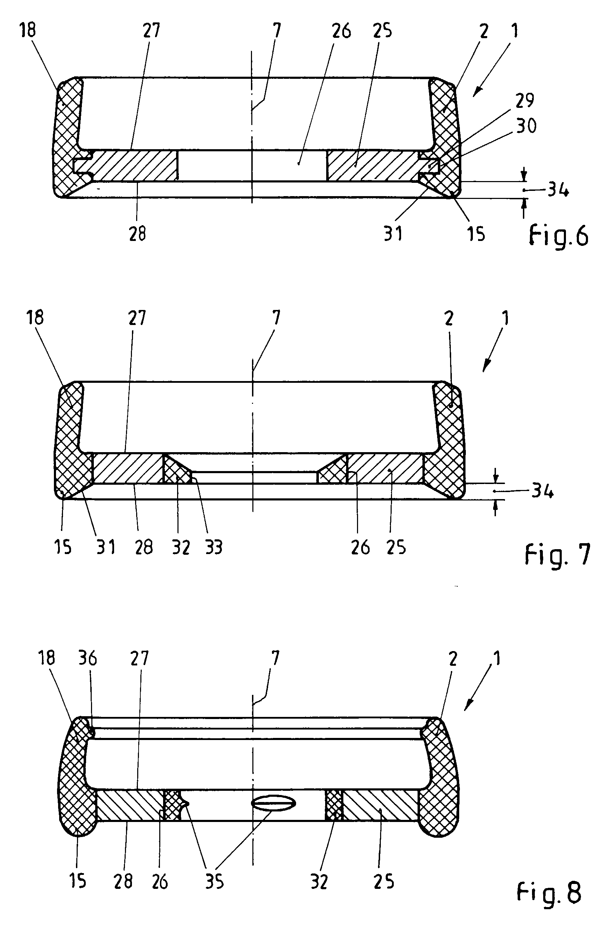

Die in Fig. 4 dargestellte Ausführungsform des Schutzrings 1 ist mehr kappenartig ausgebildet und kann vorzugsweise aufgeknüpft sein. Der Dichtring 2 ist aus zwei Materialien einstückig erstellt. Im oberen schraffierten Bereich, also insbesondere im Bereich des Schutzmantels 18, ist ein thermoplastischer Werkstoff verwendet, während im Bereich unterhalb des Kopfes 4, also insbesondere im Bereich des Wulstes 15, ein elastomeres Material eingesetzt ist. Der Dichtring 2 weist auch hier eine Durchbrechung 21 auf, ist also oben nicht geschlossen ausgebildet, um den Ansatz eines Verdrehwerkzeuges am Kopf 4 des Verbindungselementes 3 zu ermöglichen.

Die in Fig. 5 dargestellte Ausführungsform des Schutzrings 1 stimmt in weiten Bereichen mit der Ausführungsform der Fig. 4 überein. Der Dichtring 2 ist hier durchgehend aus dem gleichen Material erstellt. Neben dem ersten Wulst 15 ist im Abstand dazu ein zweiter Wulst 22 vorgesehen, der einen ähnlichen Querschnitt und eine ähnliche Formgebung aufweist wie der Wulst 15. Zwischen dem Wulst 15 und dem Wulst 22 ist eine Isolierkammer 23 gebildet, also eine nutförmig umlaufende Vertiefung. Bei dem Aufbringen der Vorspannkraft bildet sich durch bleibende Verformung des ersten Wulstes 15 die Dichtfläche 17, deren radiale Erstreckung zu der Achse 7 in Fig. 5 als ein Strich verdeutlicht ist. Auch der zweite Wulst 22 verformt sich zu einer Dichtfläche 24.

Die Ausführungsform des Schutzrings 1 gemäß Fig. 6 besteht aus zwei Teilen, nämlich dem Dichtring 2 und einem Grundkörper 25 aus Metall. Der Grundkörper 25 ist von scheibenförmiger Gestalt und weist zentrisch zur Achse 7 eine Durchbrechung 26 auf, die auf den Durchtritt des Gewindeschaftes 5 des Verbindungselementes 3 abgestimmt ist. Der Grundkörper 25 besitzt eine obere, der Auflagefläche 13 des Kopfes 4 des Verbindungselementes 3 zugekehrte Auflagefläche 27. Auch auf der anderen Seite, also dem Bauteil 8 zugekehrt, ist eine Auflagefläche 28 ausgebildet. Es versteht sich, daß in montiertem Zustand des Verbindungselementes 3 unter Zwischenschaltung des Schutzrings 1 am Bauteil 8 die Auflagefläche 28 die der Auflagefläche 13 entsprechende Funktion übernimmt. Der Grundkörper 25 besitzt auf seinem äußeren Durchmesser eine umlaufende Rippe 29, auf die der Dichtring 2 mit Hilfe einer entsprechend geformten Nut 30 aufgeknüpft ist. Auch hier weist der Dichtring 2, überstehend zu dem Grundkörper 25, den Wulst 15 auf, der hier eine schräg verlaufende Stützfläche 31 besitzt. Die Stützfläche 31 erweitert sich kegelstumpfartig in der dargestellten Richtung nach außen, damit auf jeden Fall ein Einklemmen von Material des Dichtrings 2 zwischen der Auflagefläche 28 und der Kontaktflache 16 am Bauteil 8 beim Aufbringen der Vorspannkraft vermieden wird. Durch die Ausbildung der schräg verlaufenden Stützfläche 31 bekommt der Dichtring 2 einen Querschnitt, der als Schwenkflansch bezeichnet werden kann. Durch die Zusammendrückung des Wulstes 15, wie sie beim fortlaufenden Anziehen des Verbindungselementes 3 erfolgt, wird auf den sich nach oben erstreckenden Schutzmantel eine Schwenkbewegung in Richtung auf den äußeren Umfang des Kopfes 4 des Verbindungselementes 3 iniziiert, wodurch die Anpressung und Abdichtung zwischen Schutzmantel 18 und Kopf 4 hergestellt oder verbessert wird.

Die Ausführungsform des Schutzrings 1 gemäß Fig. 7 weist den Grundkörper 25 aus Metall und den Dichtring 2 auf, der hier durch Kleben oder durch Vulkanisation befestigt ist. In der Durchbrechung 26 des Grundkörpers 25 befindet sich ein Kragen 32, der aus dem gleichen Material wie der Dichtring 2 bestehen kann und der auf gleiche Art mit dem Grundkörper 25 dauerhaft verbunden ist. Der Kragen 22 besitzt einen Innendurchmesser 33, der etwas kleiner gestaltet ist als der Außendurchmesser des Gewindeschaftes 5 des zugehörigen Verbindungselementes 3, so daß sich der Sicherungsring 1 über den Gewindeschaft 5 eines Verbindungselementes 3 aufschieben läßt, in der aufgeschobenen Stellung aber dann unverlierbar an dem Verbindungselement 3 gehalten ist.

In allen Ausführungsformen ist die Gestaltung so getroffen, daß der Wulst 15 des Dichtrings 2 gegenüber der die axiale Auflage bestimmenden Fläche, also bezüglich der Auflagefläche 28 des Ausführungsbeispiels der Fig. 7, einen definierten Überstand 34 aufweist, durch dessen Bemessung die Zusammendrückung des Wulstes 15 festgelegt ist.

Auch der Schutzring 1 gemäß Fig. 8 weist einen Kragen 32 auf. Am inneren Umfang des Kragens 32 sind mehrere Halteelemente 35 über den Umfang verteilt angeordnet, die eine ähnliche Funktion erfüllen wie der Durchmesser 33 des Kragens 32 bei der Ausführungsform gemäß Fig. 7. Es sind mindestens drei über den Umfang verteilt angeordnete Halteelemente 35 vorgesehen. Der innere Bereich des Schutzmantels 18 des Dichtrings 2 ist mit einer umlaufenden Dichtwulst 36 versehen, über die ebenfalls eine flächige, ringförmige Anlage an dem äußeren Umfang des Kopfes 4 des Verbindungselementes 3 erzielt wird. Damit wird die elastische Anpreßkraft des Dichtrings 3 im Bereich des Schutzmantels 18 auf eine kleinere ringförmige Fläche konzentriert. Sinnvoll ist auch eine Ausbildung im Zusammenspiel einer Stützfläche 31 mit einer solchen Dichtwulst 36, wobei der Querschnitt des Dichtrings 2 als Schwenkflansch ausgebildet ist.

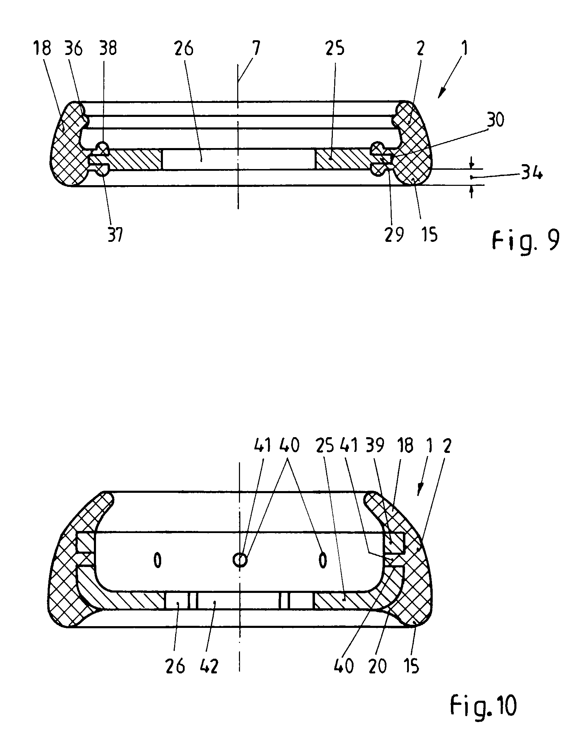

Die Ausführungsform gemäß Fig. 9 besitzt im Bereich des Schutzmantels 18 den Dichtwulst 36. Der Dichtring 2 ist ansonsten vermittels der Nut 30 auf die umlaufende Rippe 29 aufgeknüpft. In diesem Bereich sind zusätzliche Noppen 37 und 38 auf der Unterseite und auf der Oberseite ausgeprägt angeordnet, über die nach der Montage mit dem Verbindungselement 3 die Verbindung des Dichtrings 2 zu dem Grundkörper 25 stabilisiert wird. Die Noppen 37 und 38 können auch als umlaufende Rippen ausgebildet sein.

Fig. 10 zeigt schließlich eine letzte Ausführungsform des Schutzrings 1 mit einem metallenen Grundkörper 25 und einem aufgesetzten Dichtring 2 aus elastomerem Material. Der Grundkörper 2 besitzt einen umgebogenen umlaufenden Rand 39, der eine gewisse Erstreckung in Richtung der Achse 7 aufweist. In diesem Rand 39 sind Ausnehmungen 40 über den Umfang verteilt angeordnet, in welche Vorsprünge 41 des Dichtrings 2 eingreifen. Es versteht sich, daß diese Verbindungstechnik auch im Zusammenhang mit der Ausbildung des Kopfes 4 eines Verbindungselementes 3 direkt erfolgen kann. Der Dichtring 2 kann im Anschluß an den großflächig gestalteten Wulst 15 auch eine Aufknüpflippe 20 aufweisen. Im Bereich der Durchbrechung 26 kann der Grundkörper 25 radial nach innen etwas vorstehende Zungen 42 besitzen, die aus dem Material des Grundkörpers 25 gebildet sind. Die Dimensionierung dieser Zungen 42 ist derart, daß ein solcher Sicherungsring 1 mit seinem Grundkörper 25 auf den Schaft eines Schraubenrohlings vor oder nach dem Aufwalzen des Gewindes aufgesteckt werden kann, so daß auch damit eine unverlierbare Einheit aus Verbindungselement 3 und Sicherungsring 1 ermöglicht ist.

Allen Ausführungsformen des Sicherungsrings 1 ist gemeinsam, daß eine Wiederverwendbarkeit gegeben ist. Der Dichtring 2 wird nur im Rahmen seiner elastischen Eigenschaften genutzt.

### BEZUGSZEICHENLISTE

- 1 -: Schutzring
- 2 -: Dichtring
- 3 -: Verbindungselement
- 4 -: Kopf
- 5 -: Gewindeschaft
- 6 -: Absatz
- 7 -: Achse
- 8 -: Bauteil
- 9 -: Gehäuse
- 10 -: Deckel
- 11 -: Durchbrechung
- 12 -: Innengewinde
- 13 -: Auflageflache
- 14 -: Höhe
- 15 -: Wulst
- 16 -: Kontaktfläche
- 17 -: Dichtfläche
- 18 -: Schutzmantel
- 19 -: Freiraum
- 20 -: Aufknüpflippe
- 21 -: Durchbrechung
- 22 -: Wulst
- 23 -: Isolierkammer
- 24 -: Dichtfläche
- 25 -: Grundkörper
- 26 -: Durchbrechung
- 27 -: Auflagefläche
- 28 -: Auflagefläche
- 29 -: Rippe
- 30 -: Nut
- 31 -: Stützfläche
- 32 -: Kragen
- 33 -: Innendurchmesser
- 34 -: Überstand
- 35 -: Halteelemente
- 36 -: Dichtwulst
- 37 -: Noppe
- 38 -: Noppe
- 39 -: Rand
- 40 -: Ausnehmung
- 41 -: Vorsprung
- 42 -: Zunge

## Patentansprüche

1. Schutzring (1) gegen Kontaktkorrosion für ein an einem Bauteil (8) montierbares und eine Auflagefläche (13) aufweisendes Verbindungselement (3), insbesondere Schraube, mit einem Dichtring (2) aus Kunststoff, **dadurch gekennzeichnet**, daß der Dichtring (2) in unmontiertem Zustand des Verbindungselements (3) an dem Verbindungselement (3) so abgestützt ist, daß sich ein über die Auflageflache (13) des Verbindungselementes (3) am Bauteil (8) in axialer Richtung überstehender Wulst (15) ergibt, der bei der Montage des Dichtrings (2) und des Verbindungselements (3) unter Ausbildung einer ringförmigen, die Kontaktfläche (16) zwischen Verbindungselement (3) und Bauteil (8) mit Abstand umschließenden Dichtfläche (17) zum Bauteil (8) bleibend axial verspannbar ist, und daß der Dichtring (2) einen in entgegengesetzter Richtung zum Wulst (15) abstehenden Schutzmantel (18) für das Verbindungselement (3) aufweist.

2. Schutzring nach Anspruch 1, **dadurch gekennzeichnet**, daß der Schutzring (1) einen ringförmigen scheibenartigen Grundkörper (25) aus Metall aufweist, der eine Durchbrechung (26) für den Durchtritt des Verbindungselements (3), eine Auflagefläche (28) für das Bauteil (8) und eine Auflagefläche (27) für das Verbindungselement (3) besitzt.

3. Schutzring nach Anspruch 2, **dadurch gekennzeichnet**, daß der Dichtring (2) aus Kunststoff mit dem Grundkörper (25) aus Metall verbunden ist.

4. Schutzring nach Anspruch 2, **dadurch gekennzeichnet**, daß der Grundkörper (25) aus Metall im Bereich seiner Durchbrechung (26) einen Kragen (32) oder elastische Halteelemente (35) aus Kunststoff aufweist.

5. Schutzring nach Anspruch 1, **dadurch gekennzeichnet**, daß der Dichtring (2) mit dem Verbindungselement (3) als eine vormontierbare Einheit verbunden ist, und daß der Dichtring (2) einerseits und das Verbindungselement (3) andererseits zur gegenseitigen Abstützung in axialer Richtung aneinander angepaßt sind.

6. Schutzring nach Anspruch 5, **dadurch gekennzeichnet**, daß der Dichtring (2) Vorsprünge (41) und das Verbindungselement (3) korrespondierende Ausnehmungen (40) aufweisen.

7. Schutzring nach Anspruch 2 oder 5, **dadurch gekennzeichnet**, daß der Dichtring (2) aus Kunststoff einen sich im wesentlichen radial erstreckenden Schwenkflansch aufweist, an dem der axial überstehende Wulst (15) und der in entgegengesetzter Richtung abstehende Schutzmantel (18) vorgesehen sind.

8. Schutzring nach Anspruch 1, **dadurch gekennzeichnet**, daß der überstehende Wulst (15) des Dichtrings (2) in unmontiertem Zustand eine gegenüber seiner Achse (7) schrägstehend angeordnete Stützfläche (31) aufweist, die sich bei der Montage des Verbindungselementes (3) zunehmend an dem Bauteil (8) anlegt und dabei die Dichtfläche (17) bildet.

9. Schutzring nach Anspruch 1, **dadurch gekennzeichnet**, daß der Dichtring (2) einen zweiten, ebenfalls axial überstehenden Wulst (22) aufweist, der bei der Montage des Dichtrings (2) und des Verbindungselements (3) unter Ausbildung einer weiteren ringförmigen, die Kontaktfläche (16) zwischen Verbindungselement (3) und Bauteil (8) umschließenden zweiten Dichtfläche (24) zum Bauteil (8) bleibend axial verspannbar ist, und daß zwischen den beiden Wulsten (15, 22) eine Isolierkammer (23) vorgesehen ist.

10. Eine Auflagefläche (13) für ein Bauteil (8) aufweisendes Verbindungselement (3), insbesondere Schraube, mit einem Schutzring (1) gegen Kontaktkorrosion, der einen Dichtring (2) aus Kunststoff mit den im Anspruch 1 angegebenen Merkmalen aufweist.
